# EUROPÄISCHE PATENTSCHRIFT

(11) **EP 2 835 549 B1**
(45) Veröffentlichungstag und Bekanntmachung des Hinweises auf die Patenterteilung: **12.07.2017**
(21) Anmeldenummer: 14401077.4
(22) Anmeldetag: 23.07.2014
(51) Int. Cl.: F16D 41/07, F16D 41/08

(54) **Lastschaltbare Freilaufkupplung**
Power shift free-wheel clutch
Accouplement à roue libre embrayable sous charge

(30) Priorität: 26.07.2013 DE 102013108030
(43) Veröffentlichungstag der Anmeldung: 11.02.2015
(73) Patentinhaber: ÖZCAN, Umut, 70376 Stuttgart (DE)
(72) Erfinder: Özcan, Bayram, 70376 Stuttgart (DE)

(56) Entgegenhaltungen:
- EP-A1- 0 391 084
- US-A1- 2002 029 948
- US-B2- 8 042 668

## Beschreibung

Zusammenfassung: Die Lastschaltbare Freilaufkupplung (1,2) zum übertragen von Kraft zwischen zwei koaxialen Wellen, wobei die Kupplung folgendes enthält: eine Welle (10,110), um die Umfang der Welle sind symmetrisch 120 Grad versetzt angeordnete drei Längsnuten (11,111), in die Längsnuten (11,111) sind jeweils ein Stütze (20,120) bzw. ein Verlängerung des Fußes (23,123) von der Schaltmuffe (27,127) axial beweglich montiert. Auf jeder Stütze (20,120) ist ein Keil (35,135) ebenfalls in die Längsnut angeordnet; einen aus mindestens drei Segmenten (34,134) bestehenden Segmentring (30,130), der zu der Welle (10,110) koaxial angeordnet ist, äußere Außenfläche des Segmentrings (30,430) ist mit mehrere Rinnen (32,432) vorgesehen; jeweils einen Keil (35,135), die zwischen den Segmenten (34,134) des Segmentrings (30,130) platziert sind, die den Durchmesser des Segmentrings (30,130) verändern. Die Keile (35,135) sind mit der Innenwelle (10,110) drehfest verbunden; einen Gleitring (60,160) mit folgenden Eigenschaften: einem axial durchgehenden Schlitz (65,165), einer äußeren Reibfläche (62,162), die mit der Innenreibfläche (71,171) der zweiten Welle (70,170) in Eingriff gebracht werden kann, und einer Innenfläche, die mit mehrere Rinnen (61,161) vorgesehen ist; eine Gegenüberliegende Rinne (61,161) des Gleitrings (60,160) und eine Rinne (32,132) des Segmentrings (30,130) bilden zusammen eine Tasche (40,140). Innerhalb der Taschen (40,140) befinden sich Zylinderrollen (50,150); einem Aktorstift (66,166), der an der Innenwelle (10,110) radial beweglich montiert ist. Dieser Aktorstift (66,166) ist mit einer Feder (69,169) in die Richtung der Drehasche der Kupplung gespannt. Der Aktorstift (66,166) koppelt und entkoppelt den Gleitring (60,160) mit dem Segmentring (30,130); eine Nockenstange (13,113), der in einem Längsnut (12,112) der Innenwelle (10,110) axial beweglich angebracht ist. Die Nockenstange (13,113) hat die Aufgabe den Aktorstift (66,166) mit dem Ende (68,168) in den Schlitz (65,165) des Gleitrings (60,160) hinein zu schieben und es herauszulassen;
eine Schaltmuffe (27,127), die um die Innenwelle (10,110) axial beweglich montiert ist. Die Schaltmuffe (27,127) besitzt insgesamt vier Füße, drei davon sind die Füße (23,123), sie sind um 120 Grad versetzt und haben eine verlängerte Stütze (20,120). Jede Stütze (20,120) ist jeweils unterhalb eines Keils (35,135) in den Längsnut (11,111) eingebaut. Der vierte Fuß (24,124), der in die vierte Längsnut (12,112) platziert ist, hat einen Zapf (25,125). Dieser Zapf (25,125) hat die Aufgabe, die Nockenstange (13,113) axial zu bewegen;
zwei Haltescheiben (44,144) links und rechts von der Zylinderrolle (50,150), um die axiale Bewegung der Zylinderrolle (50,150) zu verhindern und die Vergrößerung des Segmentringdurchmessers zu begrenzen; eine zweite Welle (70,170), die eine Innenreibfläche (71,171) hat;
Die Lastschaltbare Freilaufkupplung wird extern betätigt bzw. gesteuert. Durch axiale Verschiebung der Schaltmuffe (27,127) wird der Gleitring (60,160) von dem Segmentring (30,130) über den Aktorstift (66,166) entkoppelt, somit ist die Kupplung eingeschaltet und durch die Verschiebung der Schaltmuffe (27,127) in die andere Richtung und durch die Änderung des Segmentringdurchmessers (30,130) wird die Kupplung unter Last ausgeschaltet.

### Beschreibung

### Gebiet der Erfindung

Diese Erfindung bezieht sich auf eine Lastschaltbare Freilaufkupplung und insbesondere auf ein Kupplung die extern gesteuert wird und unter Last leichter, mit wenig Kraftaufwand ein- und ausschaltbar ist.

### Hintergrund der Erfindung

Freilaufkupplungen sind in zahlreichen Ausführungsformen verbreitet. Mit Bezeichnungen DE 10 259 931 A1, DE 102 007 051 734 A1, DE 1 020 040 233 31 A1; EP 0 391 084 A1; US 6 409 001 B1 sind einige Beispiele unter vielen. Die sind zwischen zwei Wellen montiert, um Kraft zwischen den zwei Wellen zu übertragen. Die Kupplung ist an einer ersten Welle befestigt und kommt selektiv mit der zweiten Welle in Eingriff. Die sind selbsttätig schaltende oder schaltbare, Einrichtung oder Zweirichtung Kupplungen. Viele Kupplungen sind wie folgendes ausgelegt; sie umfassen einen festen Ring, einen Gleitring, zylindrische Rollen, die zwischen den zwei Ringen untergebracht sind. Der feste Ring und der Gleitring sind koaxiale zylindrische Ringe mit gegenüberliegenden Flächen. Jede der gegenüberliegenden Flächen weist konkave Lageroberfläche auf.

Der Gleitring weist einen axialen Schlitz auf, der sich sowohl axial als auch radial durch den Ring erstreckt. Der Schlitz ermöglicht, dass sich der Gleitring unter Kraft radial bewegt und der Gleitring ist flexibel. Der feste Ring ist an der ersten Welle montiert, der Gleitring ist in unmittelbarer Nähe zu der zweiten Wellen so angebracht, dass, wenn sich der Gleitring ausdehnt, er mit der zweiten Welle in Eingriff gelangt, wodurch Kraft zwischen den beiden Wellen übertragen wird. Sobald die Kraft von dem Gleitring entfernt wird, kehrt er in sein Ruheposition zurück. In der Ruheposition des Gleitrings wird keine Kraft zwischen den Wellen übertragen. Zur Vermeidung von Wiederholungen wird insoweit z.B. auf die Durchschriften DE 10 2007 051 734 A1 (bzw. US-Version US 8 042 668 B2) ; DE 102 59 931 A1;US 6 409 001 B1; EP 0 391 084 A1; US 2002/0029948 A1 verwiesen.

Ein Aktorstift wird verwendet, um die Kupplung in der Freilaufbetriebsart zu halten und die Kupplung in die blockierte Betriebsart zu bewegen. Der Aktor ist ein radial beweglich, an dem festen Ring montierter Stift. Wenn der Aktorstift mit beiden Ringen in Eingriff steht, sind die zwei Ringe gekoppelt und die Kupplung befindet sich in der Freilaufbetriebsart. In der Freilaufbetriebsart sind die gegenüberliegenden konkaven Lageroberflächen aufeinander ausgerichtet und die Zylinderrollen ruhen im Boden von jeder der gegenüberliegenden konkaven Oberflächen. Wenn der Aktorstift aus dem Gleitring herausgezogen wird, bewegen sich zwei Ringe relativ zueinander. Die Zylinderrollen bewegen sich aus dem Boden der gegenüberliegenden Rinnen. Sie steigen rollend entlang der diagonal gegenüberliegenden Rinnen hoch, um den Gleitring zu drücken, damit er sich ausdehnt und mit der zweiten Welle in Eingriff kommt. Anschließend wird zwischen den beiden Wellen eine Kraft übertragen, die Kupplung ist somit in die blockierte Betriebsart versetzt worden. Die Aufgabe der Erfindung des Patents DE 10 2007 051 734 A1 (bzw. US-Version US 8 042 668 B2) ist die Verminderung der Geräusche, des Klopfens und der Wärmeerzeugung, die zum schnellen Übergang zwischen den zwei Betrieibsarten gehören, durch die Verlängerung der Zeit zwischen zwei Betriebsarten. Die Aufgabe der Erfindung des Patents US 2002/0029948 A1 ist eine Freilaufkupplung für das Verteilergetriebe im Fahrzeug mit mehreren Betriebszuständen zu ermöglichen. In diesen zwei beispielhaften Patenten und in der Stand der Technik kann die Freilaufkupplung ausgeschaltet werden, wenn die Antriebswelle im Stillstand ist. Die Kraftübertragung muss unterbrochen werden, um die Kupplung von der blockierten Betriebsart auszuschalten. Dafür muss mindesten ein Ring, Festring oder Gleitring, nicht unter Last stehen, damit der Aktorstift in den Schlitz des Gleitrings hinein geschoben werden kann, wodurch der feste Ring mit dem Gleitring gekoppelt wird und die Zylinderrollen in den Boden der Taschen fallen bzw. ruhen. Während der Kraftübertragung der Kupplung ist es beinahe unmöglich oder erfordert eine große Krafteinwirkung den Aktorstift in den Schlitz des Gleitrings hinein zu schieben, weil der Gleitring relativ zu dem Segmentring verdreht ist, passt die Spitze des Aktorstifts nicht mehr in den verschobenen Schlitz hinein. Die herkömmlichen Kupplungen diese Art können während eine Kraftübertragung nicht ausgeschaltet werden oder zumindest mit relativ größere Kraftanwendung an die Kupplungskomponente ausgeschaltet werden. Daher sie werden sie meist da verwendet, wo sie nicht während einer Kraftübertragung bzw. eines Betriebszustands ausgeschaltet werden sollen.

Eine lastschaltbare Freilaufkupplung ist zum Beispiel für Fahrzeuggetriebe erwünscht. Beim Gangwechsel einiger Direktschaltfahrzeugtriebe wird der Kraftfluss von einer Welle auf eine andere Welle verlagert, ohne dabei die Kraftflusskette zu unterbrechen. Wenn das Getriebe von einer höheren Gangstufe auf eine niedrigere Gangstufe runter geschaltet wird, muss die entsprechende Kupplung der höheren Gangstufe entkoppelt werden, damit die Kupplungen der niedrigeren Gangstufe in die Kraftflusskette geschaltet werden können. In modernen Kraftfahrzeug-Automatikgetrieben werden meistens hydraulische Lamellenkupplungen verwendet. Lamellenkupplungen sind lastschaltbar, jedoch benötigen sie einen dauerhaften hydraulischen Druck für die Lamellenzylinder, sodass ein zusätzlicher Energieverbrauch hinzukommt.

### Aufgabe der Erfindung

Eine Aufgabe der vorliegende Erfindung besteht darin, ein schaltbare Freilaufkupplung zu gestalten, die lastschaltbar ist bzw. während eines Kraftflusses der Kupplung bzw. während einer Kraftübertragung der Kupplung ausschaltbar ist, und mit wenig Schaltkraft ein- oder ausschaltbar ist.

Diese und weitere Aufgaben der Erfindung werden durch eine Lastschaltbare Freilaufkupplung mit dem Merkmalen des Anspruchs 1 gelöst. Bevorzugte Ausführungsformen sind in den abhängigen Ansprüchen angegeben. Die Erfindung wird nachfolgend anhand von Ausführungsbeispielen näher erläutert.

Die Aufgaben der Erfindung werden unter Verwendung eines Segmentrings mit veränderlichem Durchmesser erreicht. Des Weiteren wird für die Kupplung ein Gleitring und ein Aktorstift verwendet.

Zylinderrollen sind zwischen dem Gleitring und dem Segmentring platziert. Während der Kraftübertragung in der Kupplung drücken die Zylinderrollen die äußere Radialfläche des Gleitrings gegen die innere Radialfläche der zweiten Welle. Die Entkopplung des Gleitrings vom Segmentring schaltet die Kupplung ein, das Verkleinern des Segmentringdurchmessers schaltet die Kupplung unter Last aus. Die Entkopplung wird durch einen Aktorstift verursacht. Zum Verkleinern des Segmentringdurchmessers werden Keile zwischen den Segmenten radial bewegt. Axial verschiebbare Stützen sind unter jedem Keil angeordnet. Bei alternativen Ausführungen sind unter den Keilen Hebeln statt Stützen angeordnet.

Die Winkelgröße der Keile reguliert die notwendige Ausschaltkraft der Kupplung. Die Keile werden von den Segmenten leichter radial zur Drehachse der Kupplung gedrückt, wenn der Keilwinkel klein ist, sodass für das Herausziehen der Stützen unter den Keilen weniger Kraft erforderlich ist.

Bei den alternative Ausführungsformen mit den Hebeln kann die Ausschaltkraft der Kupplung mit der Winkelgrößen der Keile und dem Längenverhältnisse zwischen den Hebelarmen des Hebels reguliert werden. Bei den Ausführungsformen der Kupplung ohne Keile kann die Ausschaltkraft der Kupplung nur mit dem Längenverhältnisse zwischen den Hebelarmen des Hebels reguliert werden.

Bei einer Ausführungsform ist die Kupplung an die Außenwelle montiert und die zweite Welle ist ein Hohlrad bzw. eine Innenwelle. Dadurch entsteht die Möglichkeit, die Kupplung als Einrichtungs- oder Zweirichtungsbremse für den Hohlrad einzusetzen. Letztere Kupplung benötigt keine Keile zwischen den Segmenten.

Die Kupplungen werden jeweils von einer Schaltmuffe geschaltet, die Schaltmuffe wird extern betätigt. Nachfolgend wird die Erfindung in Verbindung mit den beiliegenden Zeichnungen näher erläutert.

### Kurzbeschreibung der Zeichnungen

Fig.1 Querschnitt der Kupplung 1 im einschaltbarem Zustand;
Fig.2 Längsschnitt der Kupplung 1 nach Fig.1 entlang der Linie I-I;
Fig.3 Querschnitt der Kupplung 1 nach Fig.2 entlang der Linie III-III;
Fig.4 perspektivische Ansicht eines Keils;
Fig.5 Querschnitt der Kupplung 1 nach Fig.2, entlang der Linie II-II;
Fig.6 Querschnitt der Kupplung 1 im eingeschalteten Zustand;
Fig.7 Längsschnitt der Kupplung 1 im eingeschalteten Zustand;
Fig.8 und Fig. 9 Querschnitt und Längsschnitt der Kupplung 1 im ausgeschalteten Zustand;
Fig.10 Querschnitt der Kupplung 2 entlang des Aktorstifts 166 im einschaltbaren Zustand;
Fig.11 perspektivische Ansicht eines Segments des Segmentrings gemäß Kupplung 1;
Fig.12 perspektivische Ansicht eines Hebels gemäß Kupplung 4 und 5 Fig.22 bis Fig.25;
Fig.13 perspektivische Ansicht eines Hebels gemäß Kupplung 3 Fig.16 bis Fig. 21 und Kupplung 6 Fig.26, Fig.27;
Fig.14 Querschnitt der Kupplung 2 nach Fig. 15 entlang der Linie VII-VII;
Fig.15 Längsschnitt der Kupplung 2 im eingeschalteten Zustand;
Fig.16 bis Fig.21 Längs- und Querschnitte der Kupplung 3 im einschaltbaren Zustand Fig.16 und 17, eingeschalteten Zustand Fig.18 und 19, und ausgeschalteten Zustand Fig.20 und 21;
Fig.22 bis 24 drei Längsschnitte der Kupplung 4 im einschaltbaren Zustand Fig.22, eingeschalteten Zustand Fig.23, und ausgeschalteten Zustand Fig.24;
Fig.25 Längsschnitte der Kupplung 5 im eingeschalteten Zustand;
Fig.26 und Fig.27 Längsschnitte Kupplung 6 im einschaltbaren Zustand Fig.26, und eingeschalteten Zustand Fig.27.

Bemerkung: Die Nummerierung in den Zeichnungen ist entsprechend der Kupplung geordnet, zum Beispiel hat ein Gleitring in der Kupplung 1 die Nummer 60, in der Kupplung 2 die Nummer 160, in der Kupplung 3 die Nummer 260, in der Kupplung 4 die Nummer 360, in der Kupplung 5 die Nummer 460, in der Kupplung 6 die Nummer 560. Die anderen Bauteile sind analog nummeriert bis auf die Ausnahmen der Nummerierung von 20,21,22 in der Kupplung 1, den diese sind in den anderen Ausführungen nicht vergleichbar mit z.B. 320,321,322 oder 420,421,422 usw.

### Erstes Ausführungsbeispiel Kupplung 1:

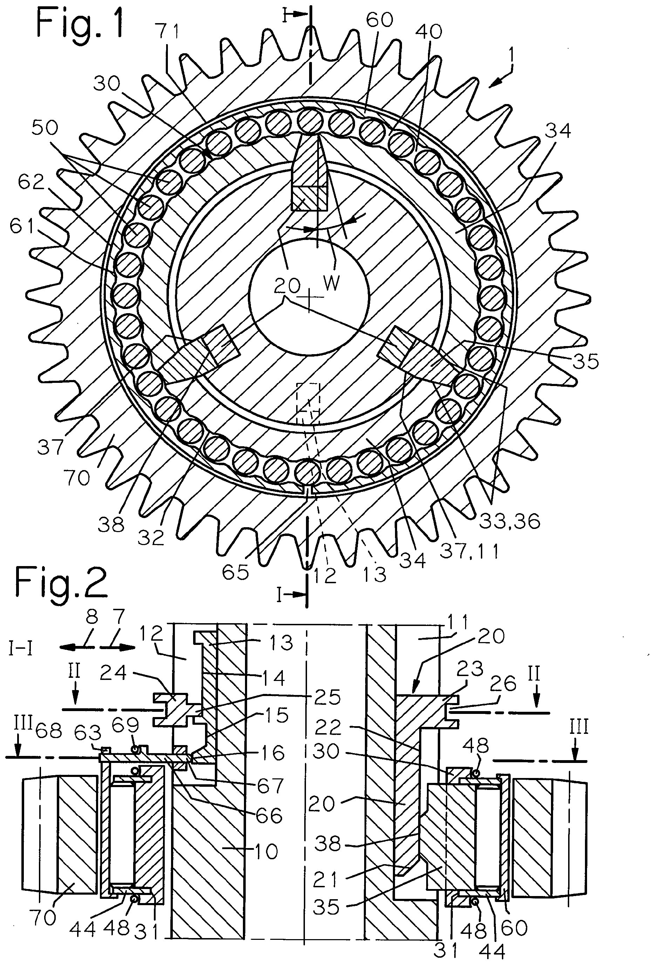

Eine Lastschaltbare Freilaufkupplung 1 enthält gemäß Fig.1 bis Fig.9 eine Innenwelle 10 mit drei Längsnutten 11 auf der Oberfläche der Welle, die um 120 Grad symmetrisch angeordnet sind. In jeder Längsnute 11 ist jeweils eine Stütze 20 der Schaltmuffe 27 axial beweglich montiert. Auf jede Stütze 20 ist ein Keil 35 innerhalb des Längsnut angeordnet. Ein Segmentring 30 mit drei Segmenten 34 ist zur Innenwelle 10 koaxial mit einem Hohlraum angeordnet, d.h. der Innendurchmesser des Segmentrings 30 ist größer als der Außendurchmesser der Innenwelle 10 damit der Innendurchmesser des Segmentrings 30 variabel geändert werden kann. Die Keilflächen 36 der Keile 35 befinden sich zwischen den Segmenten 34 des Segmentrings 30. Die Keile 35 sind radial beweglich und mit der Innenwelle 10 drehfest montiert. Die Keile 35 haben mit der Innenwelle 10 eine Nut-Feder Verbindung, somit sind sie Mitnehmer der Innenwelle 10. Durch eine axiale Verschiebung der Stützen 20 in den Längsnuten 11 werden die Keile 35 zwischen den Segmenten 34 des Segmentrings 30 in radialer Richtung zur Drehachse der Kupplung hin und weg bewegt. Diese radiale Bewegung der Keile 35 ändert den Durchmesser des Segmentrings 30. Die Außenfläche des Segmentrings 30 besitzt mehrere Rinnen-Lager 32. Ein Gleitring 60 ist zum Segmentring 30 koaxial angeordnet und besitzt einen größeren Durchmesser. Dieser Gleitring 60 hat ebenfalls Rinnen-Lager 61 auf seiner Innenfläche. Zwei gegenüberliegende Rinnen-Lager des Segmentrings 30 und des Gleitrings 60 bilden zusammen eine Tasche 40. Innerhalb dieser Taschen 40 sind Zylinderrollen 50 platziert.

An beiden axialen Enden des Segmentring 30 sind Radialnute 31 bzw. Ausschnitte vorgesehen. Eine Haltescheibe 44 ist mit seiner Innenfläche in den Radialnut 31 platziert. Die Haltescheiben 44 an den Enden des Segmentrings 30 hindern die axiale Verschiebung der Zylinderrollen 50. Des Weiteren bewirkt der Innendurchmesser der Haltescheibe 44 einen gleichmäßigen Zusammenhalt der Segmente 34 des Segmentrings 30 und es begrenzt mit seinem Innendurchmesser den Außendurchmesser des Segmentrings 30. Der Gleitring 60 bzw. C-Ring besitzt einen durchgehenden Schlitz 65 zwischen den zwei Seiten 63 und 64. Das eine Ende der zwei Seiten 63 und 64 des durchgehenden Schlitzes 65 hat eine axiale Verlängerung. Der Gleitring 60 ist wegen der Herstellung und des Materials ein C-Ring mit flexiblem Durchmesser. Der Gleitring 60 bildet ohne Krafteinwirkung einen kleineren Durchmesser. Die Außenfläche 62 des Gleitrings 60 kommt mit der Innenradialfläche 71 des Zahnrads 70 bei einer Kraftübertragung in Eingriff. Der Zahnrad 70 bildet die Außenwelle der Kupplung, es ist koaxial zum Gleitring 60 montiert und ist axial nicht verschiebbar.

An der Innenwelle 10 ist ein radial beweglicher Aktorstift 66 senkrecht zur Drehachse der Kupplung befestigt. Der Aktorstift 66 wird mit seinem Ende 68 in den Schlitz 65 des Gleitrings 60 hineingeschoben oder aus ihm herausgezogen, um den Gleitring 60 mit dem Segmentring 30 zu koppeln oder zu entkoppeln. Eine Nockenstange 13 ist in einem weiteren Längsnut 12 der Außenfläche der Innenwelle 10 axial beweglich montiert. Die Nockenstange 13 hat einen Nocken 16 bzw. Vorsprung, einen Nockental 15 und einen Ausschnitt 14. Der Aktorstift 66 bewegt sich mit seinem Ende 67 zwischen den Nocken 16 und dem Nockental 15 der Nockenstange 13. Die Schaltmuffe 27 kann mit einem Zapf 25 die Nockenstange 13 am Ausschnitt 14 axial bewegen. Die Schaltmuffe 27 ist um die Innenwelle 10 axial beweglich montiert. Die Schaltmuffe 27 besitzt insgesamt vier Füße, drei davon sind die Füße 23, sie sind in die Längsnuten 11 platziert und haben die Stütze 20 als Verlängerung. Der vierte Fuß 24, der in die vierte Längsnut 12 platziert ist, hat einen Zapf 25. Dieser Zapf 25 hat die Aufgabe, die Nockenstange 13 axial zu bewegen. Die Schaltmuffe 27 wird über den Radialnut 26 axial bewegt bzw. extern gesteuert. Zwei Federn 48 sind an beiden axialen Enden des Segmentrings 30 neben den Haltescheiben 44 gespannt. Die Federn 48 erstreben kontinuierlich eine Verkleinerung des Segmentringdurchmessers. Eine Feder 69 drückt den Aktorstift in Richtung der Drehachse der Kupplung.

Der Schaltvorgang der Kupplung wird nachfolgend erläutert: Die Kupplung 1 ist gemäß Fig.1 und Fig.2 nicht im Betrieb, sondern sie ist einschaltbar. Der Gleitring 60 ist mit dem Segmentring 30 gekoppelt. Zwischen der Innenwelle 10 und des Zahnrads 70 wird kein Kraft in beide Drehrichtungen übertragen. Die Zylinderrollen 50 befinden sich ruhend im Boden der Taschen 40. Zwischen der Außenfläche 62 des Gleitrings 60 und der Innenfläche 71 des Zahnrads 70 befindet sich ein Luftspalt. Der Radialnut 26 der Schaltmuffe 27 befindet sich auf der Höhe der skizzierten Linie "B" den Zeichnungen. Wenn die Schaltmuffe 27 in axiale Richtung zum Zahnrad 70 geschoben wird, also von der skizzierten Linie "B" zur Linie "C", schiebt der Fuß 24 der Schaltmuffe 27 mit seinem Zapf 25 die Nockenstange 13 in Richtung des Zahnrads 70, schiebt die Feder 69 den Aktorstift 66 radial zur Drehachse der Kupplung (siehe Pfeil 7). Das Ende 67 des Aktorstifts 66 fällt von der Nocke 16 in den Nockental 15 der Nockenstange 13. Das andere Ende 68 des Aktorstift 66 wird aus dem Schlitz 65 des Gleitrings 60 herausgezogen. Dadurch wird der Gleitring 60 vom Segmentring 30 entkoppelt.

Wenn die Innenwelle 10 oder der Zahnrad 70 in irgendeine Richtung gedreht wird, oder wenn sich beide Wellen unterschiedlich schnell in die gleiche Richtung drehen, dreht sich der Gleitringe 30 und der Segmentring 60 relativ zueinander, die Rinnen 32 des Segmentrings und die Rinnen 61 des Gleitrings werden zueinander verschoben und befinden sich nicht mehr gegenüberliegend. Dann steigen die Zylinderrollen 50 vom Boden der Taschen 40 auf und kommen in die Diagonale der Taschen 40. Dadurch wird der Gleitring 60 radial ausgedehnt bis die Außenfläche 62 des Gleitrings gegen die Innenfläche 71 des Zahnrads 70 gedrückt wird. Der Durchmesser des Gleitrings 60 kann sich dadurch nicht mehr vergrößern. Das weitere Drehen der Welle bewirkt das Mitdrehen des Zahnrads 70. Das Eingangdrehmoment der Kupplung ist gleich dem Ausgangsdrehmoment der Kupplung. Die Kupplung überträgt die Kraft zwischen den Wellen. Die "Blockierte Betriebsart" bzw. der kraftübertragende Zustand der Kupplung ist erreicht. Wenn sich währenddessen die Drehrichtung einer Welle ändert, springt die Kupplung kurzzeitig in den Freilaufbetrieb, somit ist die Kraftübertragung unterbrochen. Daraufhin dreht sich der Gleitring 30 und der Segmentring 60 wieder relativ zueinander,jedoch in entgegengesetzte Richtung, und der vorherige Vorgang wiederholt sich, sodass eine Kraft zwischen den Wellen entgegengesetzt übertragen wird.

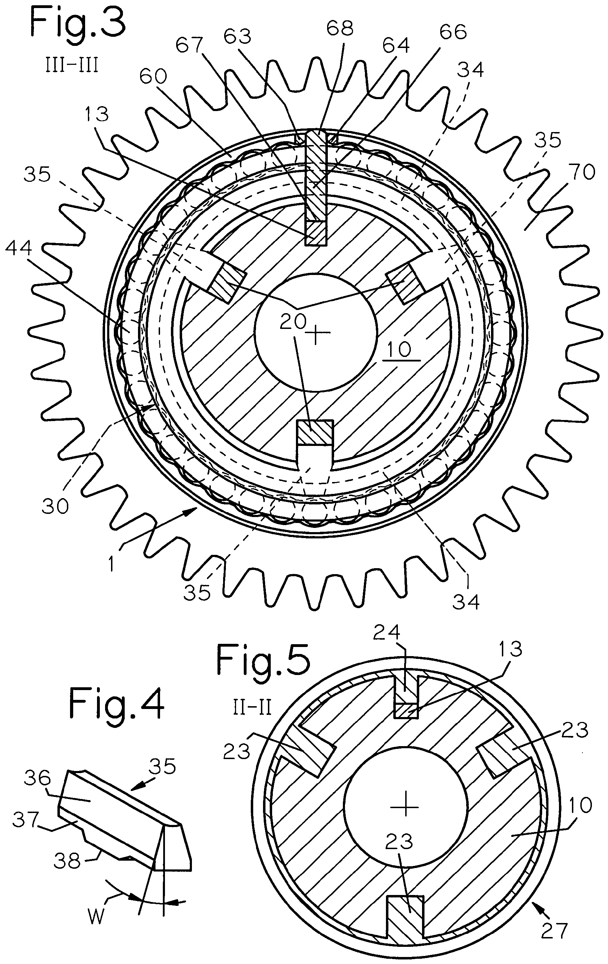

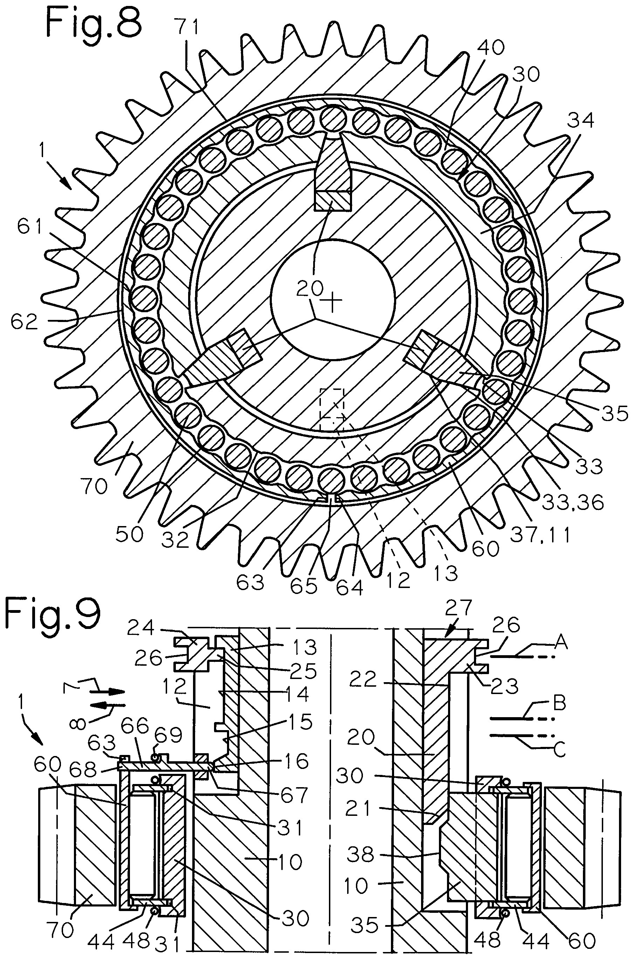

Wird das Ausschalten der Kupplung während einer Kraftübertragung zwischen den Wellen beabsichtigt, muss die Schaltmuffe 27 axial von der skizzierten Linie "C" zur Linie "A" bewegt werden (siehe Fig. 8 und Fig. 9). Während sich die Schaltmuffe 27 von Linie "C" zur Linie "A" axial bewegt, werden die Stützen 20 unterhalb der Keile 35 herausgezogen. Durch das Herausziehen der Stützen 20 werden sich die Keile 35 in Richtung Drehachse der Kupplung bewegen, weil die Federn 48 die Segment 34 zur Drehachse der Kupplung drücken. Falls die Kupplung im Lastbetrieb ausgeschaltet wird, schiebt ein Teil der zusätzlichen Kraft zwischen dem Segmentring 30 und dem Gleitring 60 die Keile 35 zur Drehachse der Kupplung. Die Winkelgröße "W" zwischen den Seitenflächen 36 des Keile 35 bestimmt den Anteil der Kraft, mit der die Keile 35 in Richtung die Drehachse der Kupplung bewegt werden (siehe Fig.4). Der Durchmesser des Segmentrings 30 wird kleiner, weil die Keile 35 nun mit ihrer schmalen Seitenfläche zwischen den Segmenten 34 sind. Das Verkleinern des Durchmessers des Segmentrings 30 vergrößert den Abstand zwischen den Rinnen-Lager 61 des Gleitrings 60 mit dem Rinnen-Lager 32 des Segmentrings 30. Die Taschen 40 haben sich vergrößert. Die Zylinderrollen 50 drücken nicht mehr die Außenfläche 62 des Gleitrings 60 gegen die Innenfläche 71 des Zahnrads 70, weil sich die Taschen 40 vergrößert haben. Dadurch ist die "Blockierte Betriebsart" bzw. der kraftübertragende Zustand der Kupplung aufgehoben und die Kraftübertragung zwischen den Wellen ist unterbrochen. Diese Vorgänge ereignen sich während die Schaltmuffe 27 eine Teilstrecke von der Linie "C" zur Linie "A" zurücklegt. Während die Schaltmuffe 27 die restlichen Teilstrecke von der Linie "C" zur Linie "A" zurücklegt, ist die Kraftübertragung unterbrochen und die Nockenstage 13 wird durch den Zapf 25 des Fuß 24 zur Linie "A" axial verschoben. Dadurch gelangt das Ende 67 des Aktorstifts 66 vom Nockental 15 auf die Nocken 16. Der Aktorstift 66 hat sich von der Drehachse der Kupplung radial wegbewegt (siehe Pfeil 8). Das andere Ende 68 des Aktorstifts 66 gelangt dadurch in den Schlitz 65 des Gleitrings 60. Dadurch ist der Gleitring 60 mit dem Segmentring 30 gekoppelt. Die Schaltmuffe 27 hat die Linie "A" erreicht. Die Schaltmuffe 27 muss zur Linie "B" verschoben werden, um die Kupplung in den einschaltbaren Zustand zu versetzen. Während sich die Schaltmuffe 27 von der Linie "A" zur Linie "B" bewegt, schieben sich die Stützen 20 unterhalb der Keile 35. Die Stützen 20 schieben radial die Keile 35 zwischen den Segmenten 34. Diese Verschiebung vergrößert den Durchmesser des Segmentrings 30 gegen die Kraft der Feder 48 solange bis der Außendurchmesser des Segmentrings 30 vom Innendurchmesser der Haltescheibe 44 begrenzt wird. Die Vergrößerung des Durchmessers des Segmentrings verkleinert die Taschen 40. Die Kupplung befindet sich nun im einschaltbaren Zustand.

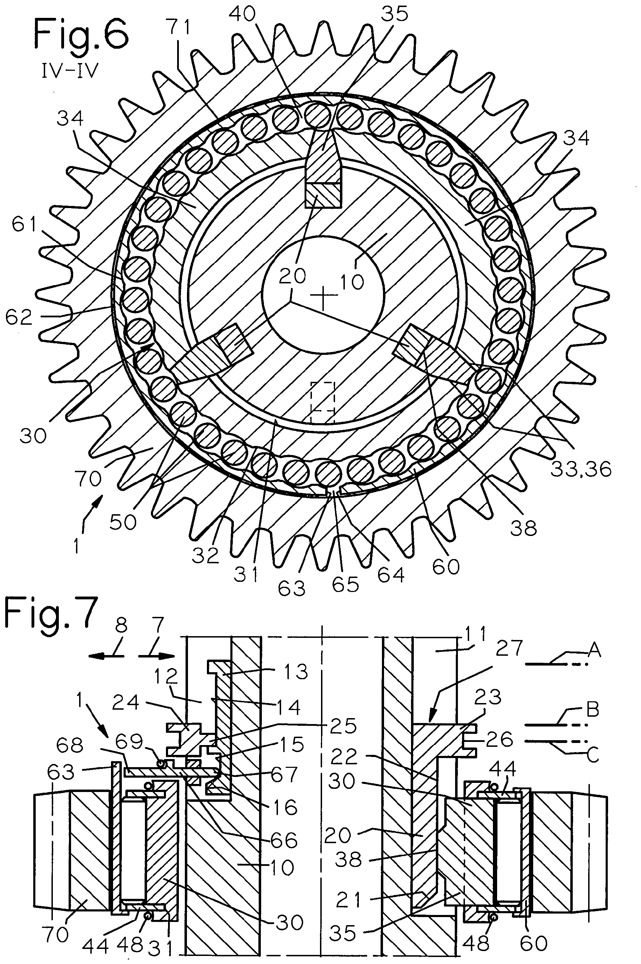

Die Betriebszustände der Kupplung können wie folgt formuliert werden: Wenn der Steuernut 26 der Schaltmuffe 27 sich auf der Linie "A" befindet, ist die Kupplung ausgeschaltet und es wird keine Kraft zwischen den Wellen übertragen (siehe Fig.8 und 9). Befindet sich der Steuernut 26 auf der Linie "B", ist die Kupplung einschaltbar und es wird keine Kraft zwischen den Wellen übertragen (siehe Fig.1 und 2). Ist der Steuernut 26 auf der Linie "C", ist die Kupplung geschaltet und eine Kraft zwischen den Wellen wird in beide Drehrichtungen übertragen (siehe Fig. 6 und 7).

### Zweites Ausführungsbeispiel Kupplung 2:

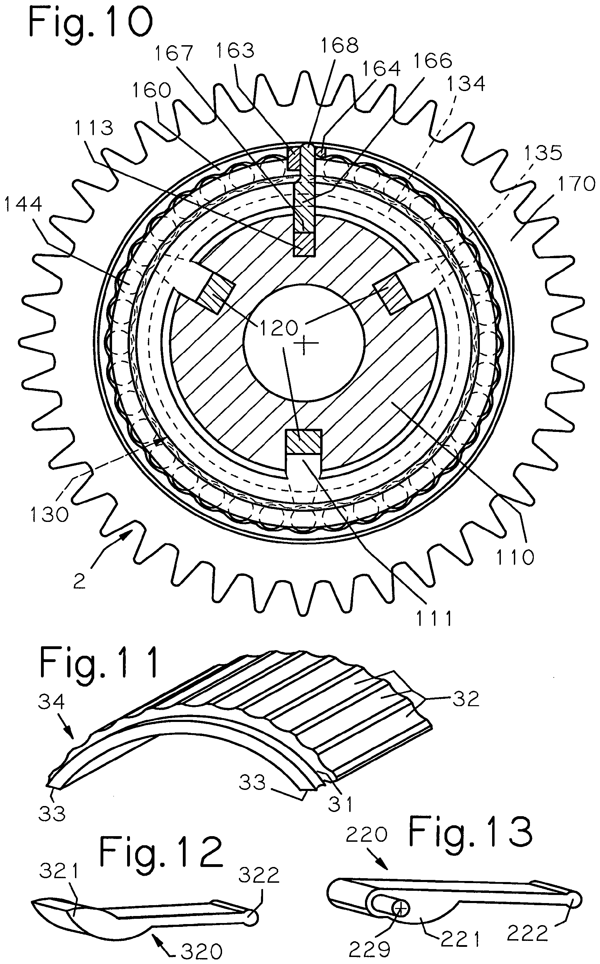

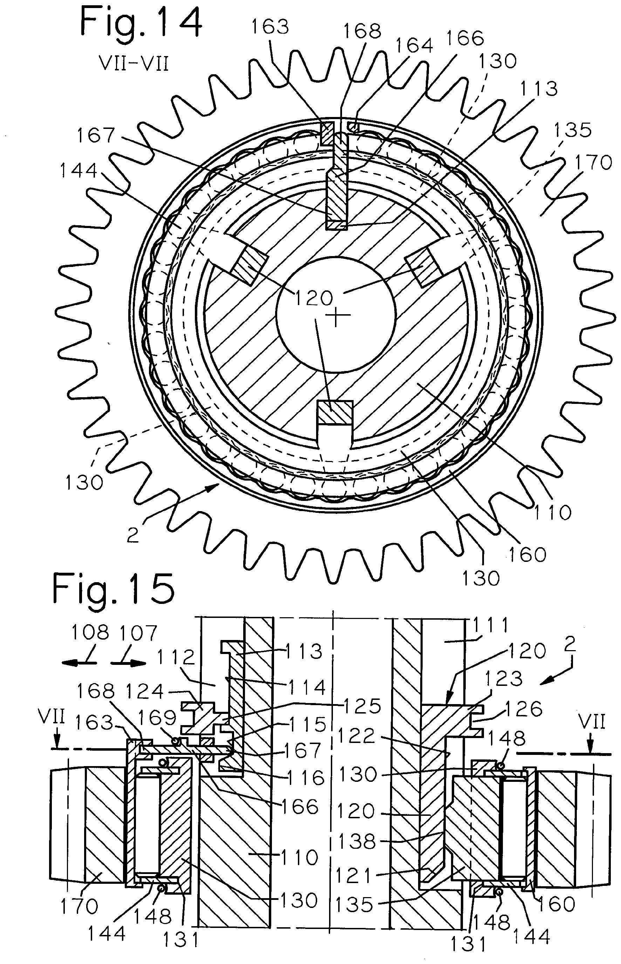

Die Kupplung 2 ist eine Einweg Freilaufkupplung gemäß Fig. 10;14;15. Die Kupplung 2 unterscheidet sich von der Kupplung 1 im Folgenden. Die Kupplung 2 besitzt auch einen Gleitring 160 bzw. C-Ring mit einem durchgehenden Schlitz 165 zwischen den zwei Seiten 163 und 164. Das eine Ende der zwei Seiten 163 und 164 des durchgehenden Schlitzes 165 hat auch eine axiale Verlängerung. Eine von diesen Verlängerungen 163 besitzt eine Nase in Richtung der Drehachse der Kupplung. Während die Kupplung 2 einschaltet, wird das Ende 168 des Aktorstift 166 aus dem Schlitz 165 herausgezogen, um den Gleitring 160 vom Segmentring 130 zu entkoppeln. Die Kupplung 2 kann eine Kraft im eingeschalteten Zustand entweder im Uhrzeigersinn von der Innenwelle 110 auf das Zahnrad 170 übertragen oder es im Gegenuhrzeigersinn von dem Zahnrad 170 auf die Innenwelle 110 übertragen. In dem anderen Drehrichtung ist die Kupplung im Freilaufbetrieb, weil die Nase der Verlängerung 163 mit dem Aktorstift 166 frühzeitig in Eingriff kommt, der Gleitring 160 sich mit dem Segmentring 130 gemeinsam dreht und dadurch die Rinnen 161 des Gleitrings mit den gegenüberliegenden Rinnen 132 des Segmentrings 130 sich nicht verschieben können. Die Zylinderrollen 150 verbleiben in den Taschen 140 ruhend, sodass die Kraftübertragung der Wellen in diese Drehrichtung nicht möglich ist. Der Aufbau und die Funktion der Kupplung 2 ist ansonsten Analog zur Kupplung 1.

### Drittes Ausführungsbeispiel Kupplung 3

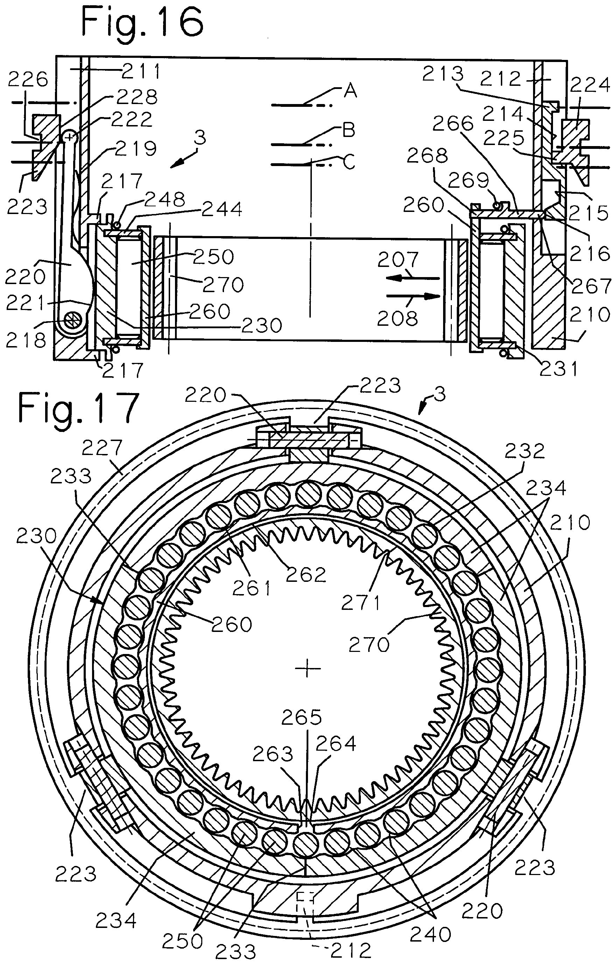

Fig.16 bis Fig.21 zeigen eine dritte Ausführung der Kupplung 1. Die Kupplung 3 kann unter anderem als Bremse für den Hohlrad eines Planetengetriebes verwendet werden. Die Kupplung 3 unterscheidet sich von der Kupplung 1 im Folgenden. Die Kupplung 3 ist an die Außenwelle 210 montiert und Innenwelle ist ein Hohlrad 270. Die Keile 35 und die Stützen 20 der Kupplung 1 entfallen in dieser Ausführung. Zusätzlich kommen drei Hebeln 220 hinzu. Die Hebeln 220 sind jeweils mit Drehbolzen 218 an die Außenwelle 210 befestigt. Der lange Hebelarme 222 der Hebeln 220 wird durch die Füße 223 der Schaltmuffe 227 gesteuert. Der Fuß 224 steuert den Aktorstift 266 über die Nockenstange 213. Die Füße 223 bzw. der Fuß 224 der Schaltmuffe sind in die Längsnuten 211 bzw. ist in den Längsnut 212 der Außenwelle 210 angeordnet. Die Hebeln 220 halten die Segmente 234 kreisförmig zusammen. Der Segmentring 230 ist durch die Nase 217 an die Außenwelle 210 drehfest montiert.

Kupplung 3 ist in Fig.16 und Fig.17 im einschaltbaren Zustand. In diesem Zustand befindet sich der Steuernut 226 der Schaltmuffe 227 auf der skizzierten Linie "B", die Spitze 268 des Aktorstifts 266 befindet sich im Schlitz 265 des Gleitrings 260 und koppelt den Gleitring 260 mit dem Segmentring 230, die Zylinderrollen 250 befinden sich in den Taschen 240 ruhend.

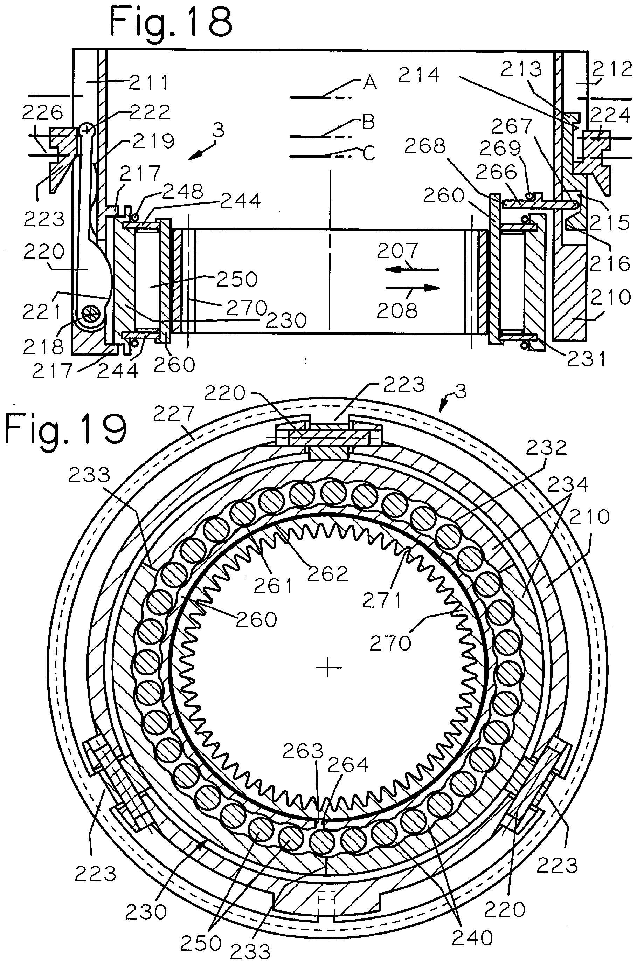

Fig.18 und Fig.19 zeigen den eingeschalteten Zustand der Kupplung 3. Zum Einschalten der Kupplung 3 wird der Steuernut 226 der Schaltmuffe 227 von der Linie "B" zur Linie "C" axial verschoben. Das Ende 267 des Aktorstifts 266 gelangt von der Nocke 216 zum Nockental 215 der Nockenstange 213 durch die Federkraft der Feder 269 (siehe Pfeil 208). Das andere Ende 268 des Aktorstift 266 wird aus dem Schlitz 265 des Gleitrings 260 herausgezogen. Der Gleitring 260 ist vom Segmentring 230 in beide Drehrichtungen entkoppelt. Die Kupplung 3 befindet sich von nun an im Betriebszustand. Wenn sich eine der Wellen 210 oder 270 relativ zueinander drehen, steigen die Zylinderrollen 250 diagonal vom Taschenboden der Taschen 240 hoch und drücken den Gleitring 260 zusammen. Dadurch verkleinert sich der Durchmesser des elastischen Gleitrings 260 bis die Innenfläche 262 des Gleitrings 260 an die Außenfläche 271 des Hohlrads 270 gedrückt wird. Die weitere Drehung der Antriebswelle bewirkt eine Drehung der anderen Welle. Die Kupplung 3 befindet sich im blockierten Betriebszustand und die Drehmomente der Wellen sind gleich, sodass eine Kraft übertragen wird.

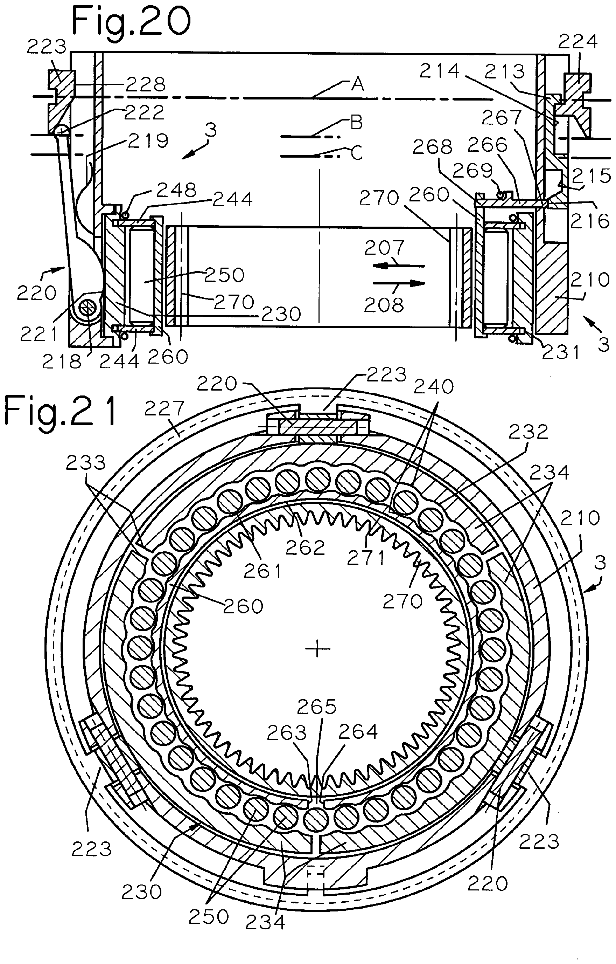

Zum Ausschalten der Kupplung 3 wird der Steuernut 226 der Schaltmuffe 227 von der Linie "C" zur Linie "A" zurückgezogen (siehe Fig.20 und Fig.21). Zuerst drücken dabei die Drehkräfte der Kupplung und die Federkräfte der Federn 219/248 die langen Hebelarme 222 bzw. die kurzen Hebelarme 221 der Schalthebel 220 nach außen und der Segmentring 230 vergrößert seinen Durchmesser, weil die Segmente 234 des Segmentrings 230 sich nach außen bewegen. Die Zylinderrollen 250 können nicht mehr die radiale Innenfläche 262 des Gleitring 260 an die radiale Außenfläche 271 des Hohlrades 270 drücken. Der blockierte Betriebszustand der Kupplung 3 ist aufgehoben. Danach schiebt der Zapf 225 des Fußes 224 die Nockenstange 213 axial zur Linie "A", wobei das Ende 267 des Aktorstifts 266 vom Nockental 215 zum Nocken 216 gelangt und das andere Ende 268 des Aktorstifts 266 wird in den Schlitz 265 des Gleitrings 260 hineingeschoben. Der Gleitring 260 ist mit dem Segmentring 230 gekoppelt. Der Steuernnut 226 der Schaltmuffe 227 hat die Linie "A" erreicht. Die Kupplung 3 befindet sich im ausgeschalteten Zustand. Um die Kupplung 3 in den einschaltbaren Zustand zu versetzten, wird der Steuernut 226 der Schaltmuffe 227 von der Linie "A" zur Linie "B" bewegt. Dabei drücken die Füße 223 der Schaltmuffe 227 die langen Hebelarme 222 zur Drehachse der Kupplung entgegen der Federkraft der Federn 219 bzw. 248 und die Segmente 234 des Segmentrings 230 bewegen sich nach innen, sodass sich der Durchmesser des Segmentrings 230 verkleinert. Somit befindet sich die Kupplung 3 im einschalbaren Zustand.

Bemerkung: Das Längenverhältnisse vom kurzen 221 zum langen 222 Hebelarm der Hebel 220 reguliert die Ausschaltkraft der Kupplung 3.

### Viertes Ausführungsbeispiel Kupplung 4

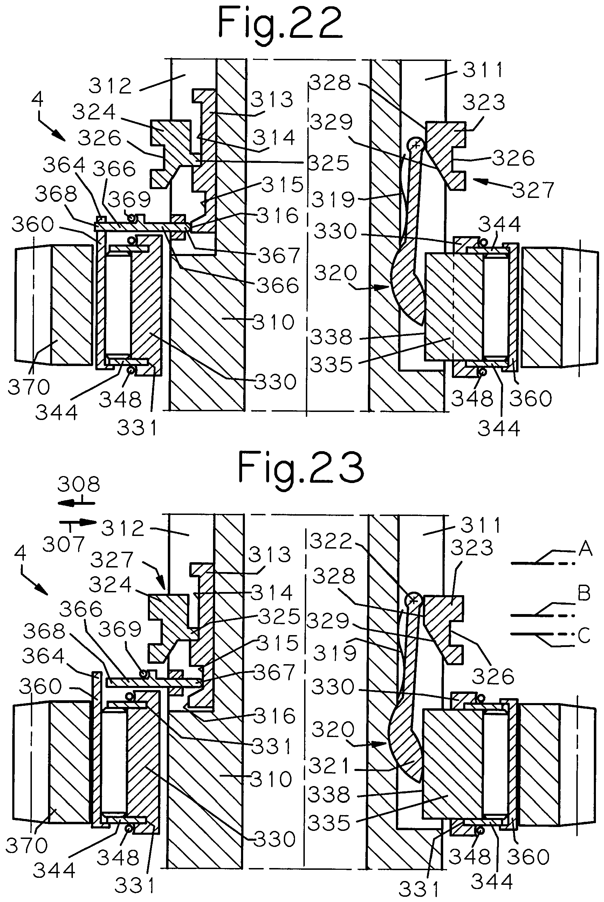

Kupplung 4 ist eine weitere Ausführung der Kupplung 1 gemäß Fig.22 bis Fig.24. ist mit Hebeln 320 ausgestattet. Das ist die unterschied zu der Kupplung 1. Die Kupplung 4 besitzt drei Hebeln 320 unter den drei Keilen 335 und die Stützen 20 der Kupplung 1 entfallen in dieser vierten Ausführung. Die drei Hebeln 320 sind jeweils in die Längsnuten 311 montiert. Der kurze Hebelarm 321 des Hebels 320 befindet sich unter dem Keils 335 und der lange Hebelarm 322 befindet sich unter dem Fuß 323 der Schaltmuffe 327. Die Füße 323 der Schaltmuffen 327 besitzen eine Lagerfläche 328 parallel zur Drehachse der Kupplung und eine schräg gebildete Lagerfläche 329 bzw. eine Rampe, die sich beide auf der Seite der Drehachse der Kupplung befinden. Diese beiden Lagerflächen 328 bzw. 329 des Fußes 323 betätigen den langen Hebelarm 322 und dadurch steuern sie den Hebel 320.

Die Kupplung 4 ist in Fig. 22 im einschaltbaren Zustand. Der Einschaltvorgang und der Ausschaltvorgang der Kupplung 4 unterscheidet sich nur dadurch von Kupplung 1, dass die axiale Verschiebung der Stützen 20 der Kupplung 1 ersetzt wird durch die radiale Bewegung der Hebeln 323. Zum Ausschalten der Kupplung 4 während der Kraftübertragung wird der Steuernut 326 der Schaltmuffe 327 von der Linie "C" zur Linie "A" bewegt. Dabei schiebt die Kraft der Kupplung und die Federkraft der Federn 319 bzw. 348 den langen Hebelarm 322 des Hebels 320 radial von der Drehachse der Kupplung hinweg und der kurze Hebelarm 321 des Hebels 320 bewegt sich mit den Segmenten 334 des Segmentrings 330 zur Drehachse der Kupplung hin. Dadurch wird der Durchmesser des Segmentrings 330 verkleinert. Zum Vermeiden von Wiederholungen wird für Einzelheiten des Schaltvorgangs auf die erste Ausführungsbeispiel verwiesen. Die Querschnittzeichnungen der Kupplung 4 sind analog zur den Zeichnungen von Fig. 6 und Fig. 8 der Kupplung 1 mit entsprechenden Nummerierungen. Somit wird auf diese Zeichnungen verwiesen.

### Fünfte Ausführungsbeispiel Kupplung 5

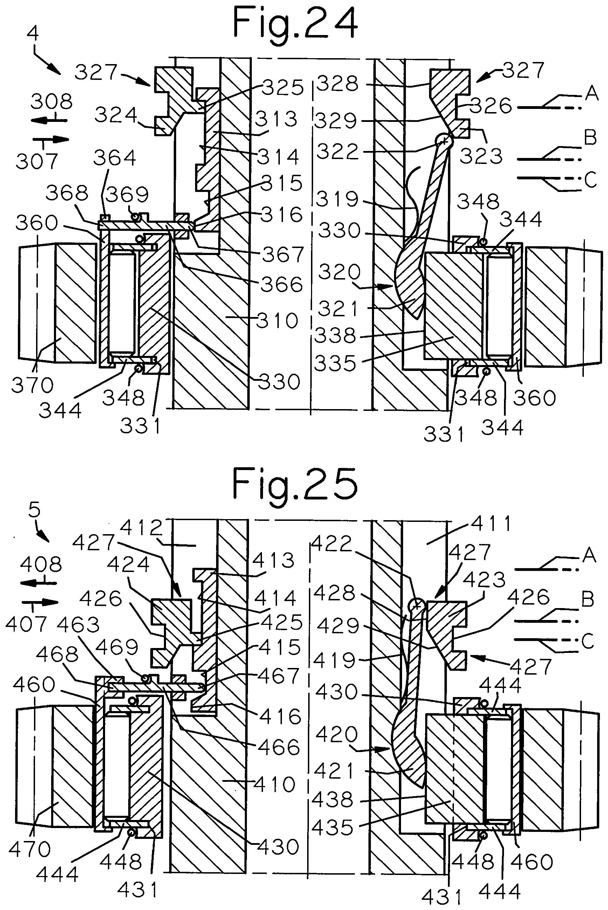

Fig. 25 bezieht sich auf das fünfte Ausführungsbeispiel Kupplung 5. Dies ist eine Einrichtung-Freilaufkupplung und kann im eingeschalteten Zustand der Kupplung 5 nur in eine Richtung die Kraft zwischen den Wellen 410 und 470 übertragen. Der Grund liegt darin, dass das eine Ende 463 oder 464 des Gleitrings 460 mit einer Nase vorgesehen ist und damit kann der Gleitring 460 nur in eine Drehrichtung vom Segmentring 430 entkoppelt werden. Die übrigen Komponenten der Kupplung 5 sind zur Kupplung 4 analog aufgebaut.

### Sechste Ausführungsbeispiel Kupplung 6

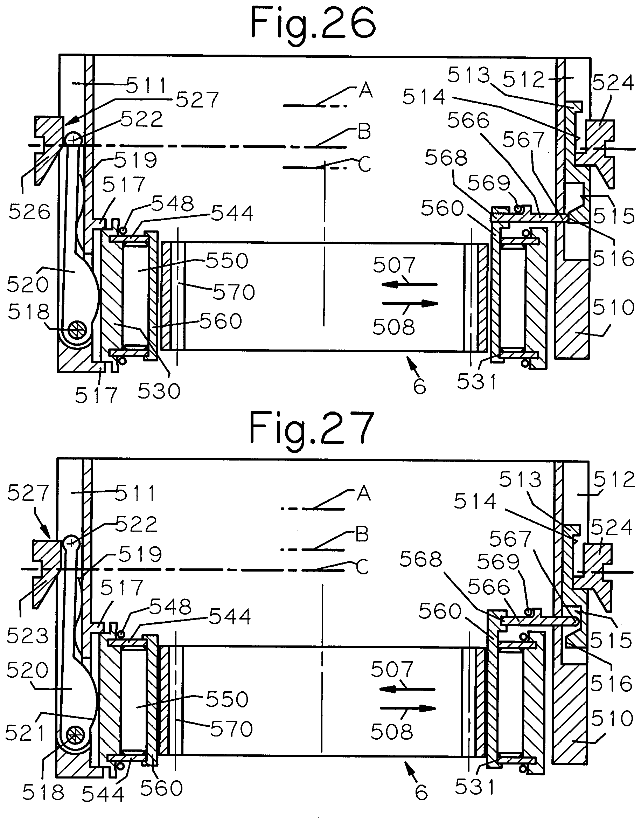

Fig. 26 und Fig. 27 beziehen sich auf das sechste Ausführungsbeispiel Kupplung 6. Dies ist eine Einrichtung-Freilaufkupplung und kann im eingeschalteten Zustand der Kupplung 6 nur in eine Richtung die Kraft zwischen den Wellen 510 und 570 übertragen oder einen Hohlrad eines Planetengetriebes nur in eine Drehrichtung bremsen bzw. sperren. Der Grund für die einzige Drehrichtung liegt darin, dass das eine Ende 563 oder 564 des Gleitrings 560 mit einer Nase vorgesehen ist und damit kann der Gleitring 560 nur in eine Drehrichtung vom Segmentring 530 entkoppelt werden. Die übrigen Komponenten der Kupplung 6 sind zur Kupplung 3 analog aufgebaut.

### Bezugszeichenliste

- 1,2,3,4,5,6: Kupplung

- 7,107,207,307,407,507: Richtungspfeil
- 8,108,208,308,408,508: Richtungspfeil
- 10,110,210,310,410,510: Welle
- 11,111,211,311,411,511: Längsnut
- 12,112,212,312,412,512: Längsnut
- 13,113.213.313.413.513: Nockenstange
- 14,114,214,314,414,514: Vertiefung, Ausschnitt
- 15,115,215,315,415,515: Nockental
- 16,116,216,316,416,516: Nocken
- 217,517: Haltenasen der Welle 210, 510
- 218,518: Drehbolzen
- 219,319,419,519: Feder
- 20,120: Stütze
- 220,520: Hebel
- 320,420: Hebel
- 21,121: Rampe der Stütze
- 22,122: Seitenfläche der Stütze
- 23,123: Schuh
- 221,321,421: Kurze Hebelarm
- 222.322.422: Lange Hebelarm
- 223,323,423,523: Fuß der Schaltmuffe
- 24,124,324,424,524: Fuß der Schaltmuffe
- 25,125,225,325,425,525: Zapf
- 26,126,226,326,426,526: Radialnut
- 27,127,227,327,427,527: Schaltmuffe
- 228,328,428,528: Seitenoberfläche des Fußes
- 229,529: Rampe des Fußes
- 30,130,230,330,430,530: Segmentring
- 31,131,231,331,431,531: Radiale Nut
- 32,132,232,332,432,532: Rinnen-Lager des Segmentrings
- 33,133,233,333,433,533: Seitenoberfläche des Segments
- 34,134,234,334,434,534: Segment
- 35,135,335,435: Keil
- 36,136,336,436: Seitenoberfläche des Keils
- 37,137,337,437: Seitenoberfläche des Keils
- 38,138,338,438: Seitenoberfläche des Keils
- 40,140,240,340,440,540: Taschen
- 44,144,244,344,444,544: Haltescheibe
- 48,148,248,348,448,548: Feder
- 50,150,250,350,450,550: Zylinderrollen
- 60,160,260,360,460,560: Gleitring
- 61,161,261,361,461,561: Rinnen-Lager des Gleitrings
- 62,162,362,462: Außenradialfläche des Gleitrings
- 262,562: Innenradialfläche des Gleitrings
- 63,163,263,363,463,563: Schlitzende des Gleitrings
- 64,164,264,364,464,564: Schlitzende des Gleitrings
- 65,165,265,365,465,565: Schlitz des Gleitrings
- 66,166,266,366,466,566: Aktorstift
- 67,167,267,367,467,567: Ende des Aktorstift
- 68,168,268,368,468,568: Ende des Aktorstift
- 69,169,269,369,469,569: Feder
- 70,170,270,370,470,570: Welle (Zahnrad)
- 71,171,371,471: Innenradialfläche der Welle (Zahnrad)
- 271,571: Außenradialfläche der Welle (Hohlrad)

Diese Beschreibungen der verschiedenen Ausführungen der Kupplung sollen die vorliegende Erfindung veranschaulichen. Der Fachmann ist in der Lage sich vorzustellen, dass bestimmte Elemente hinzugefügt oder weggelassen werden, oder sich bestimmte Abwandlungen der beschriebenen Ausführungen vorzustellen, die, obwohl sie hier nicht ausdrücklich offenbart sind, vom Schutzumfang der Erfindung eingeschlossen werden, wie er von den beigefügten Ansprüchen definiert wird.

## Patentansprüche

1. Die Lastschaltbare Freilaufkupplung (1,2) zum Übertragen von Kraft zwischen zwei koaxialen Wellen, wobei die Kupplung folgendes enthält:
eine Welle (10,110), auf der Welle sind symmetrisch, um 120 Grad versetzt angeordnete drei Längsnuten (11,111), in die Längsnuten (11,111) sind jeweils eine Stütze (20,120) bzw. eine Verlängerung des Fußes (23,123) von der Schaltmuffe (27,127) axial beweglich montiert; auf jeder Stütze (20,120) ist ein Keil (35,135) ebenfalls in die Längsnut angeordnet;
einen aus mindestens drei Segmenten (34,134) bestehenden Segmentring (30,130), der zu der Welle (10,110) koaxial angeordnet ist, eine Außenfläche des Segmentrings (30,430), die mit mehrere Rinnen (32,432) vorgesehen ist;
jeweils einen Keil (35,135), der zwischen den Segmenten (34,134) des Segmentrings (30,130) platziert sind, die den Durchmesser des Segmentrings (30,130) verändern; die Keile (35,135) sind mit der Innenwelle (10,110) drehfest verbunden;
einen Gleitring (60,160) mit folgenden Eigenschaften: einem durchgehenden Schlitz (65,165), einer äußeren Reibfläche (62,162), die mit der Innenreibfläche (71,171) der zweiten Welle (70,170) in Eingriff gebracht werden kann, und einer Innenradialfläche, die mit mehrere Rinnen (61,161) vorgesehen ist; eine gegenüberliegende Rinne (61,161) des Gleitrings (60,160) und eine Rinne (32,132) des Segmentrings (30,130) bilden zusammen eine Tasche (40,140); innerhalb der Taschen (40,140) befinden sich Zylinderrollen (50,150);
einem Aktorstift (66,166), der an der Innenwelle (10,110) radial beweglich montiert ist; dieser Aktorstift (66,166) ist mit einer Feder (69,169) in Richtung der Drehachse der Kupplung gespannt; der Aktorstift (66,166) koppelt und entkoppelt den Gleitring (60,160) mit dem Segmentring (30,130);
eine Nockenstange (13,113), der in einem Längsnut (12,112) der Innenwelle (10,110) axial beweglich angebracht ist; die Nockenstange (13,113) hat die Aufgabe den Aktorstift (66,166) in den Schlitz (65,165) des Gleitrings (60,160) hinein zu schieben und es herauszulassen;
eine Schaltmuffe (27,127), die um die Innenwelle (10,110) axial beweglich montiert ist; die Schaltmuffe (27,127) besitzt insgesamt vier Füße, drei davon sind die Füße (23,123) und einer davon ist der Fuß (24,124); die drei Füßen (23,123) sind zueinander um 120 Grad versetzt angeordnet und haben jeweils eine verlängerte Stütze (20,120); jede Stütze (20,120) ist jeweils unterhalb eines Keils (35,135) in den Längsnut (11,111) eingebaut; der vierte Fuß (24,124), der in die vierte Längsnut (12,112) platziert ist, hat einen Zapf (25,125); dieser Zapf hat die Aufgabe die Nockenstange (13,113) axial zu bewegen;
zwei Haltescheiben (44,144) links und rechts von der Zylinderrolle (50,150), um die axiale Bewegung der Zylinderrolle (50,150) und die Vergrößerung des Segmentringdurchmessers, mehr als vorgegebenen Maß, zu verhindern; jede Haltescheibe (44,144) ist in einen radialen Nut (31,131) des Segmentrings (30,130) gelagert;
jeweils eine Feder (48,148),die an beiden Seiten des Segmentrings (30,130) gespannt sind, die eine ständige Verkleinerung des Segmentringdurchmessers bewirken wollen; eine zweite Welle (70,170), die eine Innenreibfläche (71,171) hat;
eine Schaltmuffe (27,127), die die Lastschaltbare Freilaufkupplung (1,2) durch die Entkopplung des Gleitrings (60,160) einschaltet und die Kupplung unter Last durch Änderung des Segmentringdurchmessers ausschaltet;
die unter Last benötigte Ausschaltkraft der Kupplung (1,2) ist mit dem an der Seitenfläche (36,136) der Keile (35,135) befindliche Winkelgrößen (W) regulierbar.

2. Lastschaltbare Freilaufkupplung (4,5) zum Übertragen von Kraft zwischen zwei koaxialen Wellen nach Anspruch 1, **dadurch gekennzeichnet, dass** die unter Last benötigte Ausschaltkraft der Kupplung (4,5) ist mit dem an dem Seitenflächen (336,436) der Keile (335,435) befindliche Winkelgrößen (W) und mit dem Längenverhältnisse, zwischen dem kürzeren Hebelarme (321,421) und dem längeren Hebelarme (322,422) des Hebels (320,420) regulierbar.

3. Lastschaltbare Freilaufkupplung (3,6) nach Anspruch 2, wobei die Freilaufkupplung (3,6) auf der Außenfläche der Welle (270,570) und der Innenfläche der Welle (210,510) montiert ist, um die Funktion einer schaltbaren Bremse zu realisieren.

4. Lastschaltkupplung (1,2,4,5) nach Anspruch 1, **dadurch gekennzeichnet, dass** die Kupplung (1,2,4,5) mit Entkoppeln des Segmentrings (30,130,330,430) von dem Gleitring (60,160,360,460) per axiale Verschiebung der Schaltmuffe (27,127,327,427) mittels Aktorstift (66,166,366,466), Schaltnocken (13,113,313,413) eingeschaltet wird, durch verkleinern der Durchmesser des Segmentrings (30,130,330,430), mit Ausziehen der Keile (35,135,335,435) zwischen den Segmenten (334,434) ausgeschaltet wird.

5. Lastschaltkupplung (3,6) nach Anspruch 3, **dadurch gekennzeichnet, dass** die Kupplung (3,6), mit Entkoppeln des Segmentrings (230,530) von dem Gleitring (260,560) per axiale Verschiebung der Schaltmuffe (227,527) mittels Aktorstift (266,566), die Nockenstange (213,513) eingeschaltet wird und durch Vergrößern des Durchmessers des Segmentrings (230,530) mittels Schalthebel (220,520) und Federn (248,548 bzw. 229,529) ausgeschaltet wird.

6. Lastschaltkupplung (1,2,4,5) nach Anspruch 1 oder 2, **dadurch gekennzeichnet, dass** alle drei Segmente (34,134,334,434) und alle drei Keile (35,135,335,435) zusammen den durchmesserveränderlichen Klemmring (30,130) bilden.

7. Lastschaltkupplung nach Anspruch 1 bis 6, **dadurch gekennzeichnet, dass** das Ein- und Ausschalten der Kupplung (1,2,3,4,5,6), mit kupplungs-extern gesteuerten Schaltmuffen (27,127,227,327,427,527) stattfindet.

8. Lastschaltkupplung (1,3,4) nach Anspruch 1 bis 7, **dadurch gekennzeichnet, dass** die Kupplung beim eingeschalteten Zustand mittels Aktorstift (66, 266, 366) den Segmentring (30, 230,330) von dem Gleitring (60, 260, 360) in beide Drehrichtungen entkoppelt, damit sie eine Kraft zwischen der Welle (10, 210, 310) und der Welle (70, 270, 370) in beide Richtungen übertragen kann, und dadurch eine Zweirichtung-Freilaufkupplung ist.

9. Lastschaltkupplung (2,5,6) nach Anspruch 1 bis 8, **dadurch gekennzeichnet, dass** der Segmentring (130, 430, 530) von dem Gleitring (160, 460, 560) nur in eine Drehrichtung entkoppelt werden kann, dadurch die Kupplung (2,5,6) eine Einrichtungs-Freilaufkupplung ist.

10. Lastschaltkupplung (1,2,3,4,5,6) nach Anspruch 1 bis 9, **dadurch gekennzeichnet, dass** die Kupplung (1,2,3,4,5,6) mit Klemmkörpern, Klemmrollen oder mit Klemmkugeln, mit oder ohne Käfig ausgestattet ist.

## Claims

1. The Power shif free-wheel clutch (1,2) for transmitting force between two coaxial shafts, wherein the clutch comprises:
a shaft (20, 20), on the shaft there are symmetrical by 120 degree three longitudinal grooves (11, 111), in each longitudinal grooves (11, 111) a support (20, 120) respectively an extension of the foot (23, 123) from the slding clutch (27, 127) are mounted axially movably; on each support (20, 120) a wedge (35, 135) is also mounted in the grooves;
a segment ring (30,130) consisting of at least three segments (34,134) is ordered coaxially with the shaft (10,110), an outer surface of the segment ring (30,430) provided with several furrows (32,132);
each with a wedge (35,135) placed between the segments (34,134) of the segment ring (30,130) which vary the diameter of the segment ring (30,130); the wedges (35, 135) are non-rotatably connected to the inner shaft (10, 110);
a sliding ring (60, 60) having the following characteristics: a continuous slot (65, 165), an outer friction surface (62,162) which can be engaged with the inner friction surface (71,171) of the second shaft (70,170), and an inner radial surface which is provided with several furrows (61,161); an opposing furrow (61,161) of the sliding ring (60,160) and a furrow (32,132) of the segment ring (30,130) together form a pocket (40,140); inside the pockets (40, 140) there are cylindrical rollers (50, 150);
an actuator pin (66,166) which is radially movably mounted on the inner shaft (10,110); this actuator pin (66, 166) is tensioned with a spring (69, 169) in the direction of the axis of rotation of the clutch; the actuator pin (66,166) couples and decouples the sliding ring (60,160) with the segment ring (30,130);
a cam rod (13,113) which is axially movably mounted in a longitudinal groove (12,112) of the inner shaft (10,110); the cam rod (13, 113) has the function of pushing the actuator pin (66, 166) into the slot (65, 165) of the sliding ring (60, 160) and letting it out;
a sliding clutch (27, 127) which is axially movably mounted about the inner shaft (10, 110); the sliding clutch (27, 127) has a total of four feet, three of which are the feet (23, 123) and one of which is the foot (24, 124); the three feet (23,123) are mounted to each other by 120 degrees and each have an extended support (20, 120); each support (20, 120) is mounted below a wedge (35, 135) in the longitudinal groove (11, 111); the fourth foot (24, 124) placed in the fourth longitudinal groove (12, 12) has a pin (25, 125); this pin has the task of axially moving the cam rod (13,113);
two support plates (44,144) on the left and right of the cylindrical roller (50,150) to prevent the axial movement of the cylindrical roller (50,150) and the enlargement of the segment ring diameter more than predetermined; each support plate (44, 144) is kept in a radial groove (31, 131) of the segment ring (30, 130); each having a spring (48, 148) tensioned on both sides of the segment ring (30, 130) which wish to effect a continuous reduction of the segment ring diameter; a second shaft (70,170) having an inner friction surface (71,171);
a sliding clutch (27, 127) which turns on the Power shif free-wheel clutch (1,2) by the decoupling of the sliding ring (60, 160) and switches off the clutch under load by changing the segment ring diameter;
the breaking force of the clutch (1, 2) required under load can be regulated with the angular variables (W) located on the side face (36, 136) of the wedges (35, 135).

2. The Power shif free-wheel clutch (4, 5) for transmitting force between two coaxial shafts according to claim 1, **characterized in that** the breaking force of the clutch (4,5) required under load is adjustable with the angular variables (W) on the side faces (336,436) of the wedges (335,435) and the length ratio between the shorter lever arm (321, 421) and the longer lever arm (322, 422) of the lever (320, 420).

3. The Power shif free-wheel clutch (3, 6) according to claim 2, wherein the free-wheel clutch (3, 6) is mounted on the outer surface of the shaft (270, 570) and the inner surface of the shaft (210, 510) to realize the function of a switchable brake.

4. The Power shif free-wheel clutch (1, 2, 4, 5) according to claim 1, **characterized in that** the clutch (1, 2, 4, 5) is turned on by decoupling the segment ring (30, 130, 30, 400) from the sliding ring (60, 160, 360, 460) per axial movement of the sliding clutch (27, 127, 327, 427) by means the actuator pin (66, 166, 366, 466), switching cams (13, 113, 313, 413), and is turned off by reducing the diameter of the segment ring (30, 130, 330, 430) by means of pulling out the wedges (35, 135, 335, 435) between the segments (334, 434).

5. The Power shif free-wheel clutch (3, 6) according to claim 3, **characterized in that** the clutch (3,6) is turned on by decoupling the segment ring (230, 530) from the sliding ring (260, 560) per axial movement of the sliding clutch (227, 527) by means of the actuator pin (266, 566), cam rod (213, 513) and is turned off by increasing the diameter of the segment ring (230,530) by means of the switching lever (220, 520) and springs (248, 548 or 229,529).

6. The Power shif free-wheel clutch (1, 2, 4, 5) according to claim 1 or 2, **characterized in that** all three segments (34, 134, 334, 434) and all three wedges (35, 135, 335, 435) together form the diameter-variable clamping ring (30, 130).

7. The Power shif free-wheel clutch according to claim 1 to 6, **characterized in that** the clutch (1, 2, 3, 4, 5, 6) is switched on and off with clutch-externally controlled sliding clutches (27, 127, 227, 327, 427, 527).

8. The Power shif free-wheel clutch (1, 3, 4) according to claim 1 to 7, **characterized in that** the clutch in the switched on state decouples by means of the actuator pin (66, 266, 366) the segment ring (30, 230, 330) from the sliding ring (60, 260, 360) in both directions of rotation, so it can transmit a force in both directions between the shaft (10, 210, 310) and the shaft (70, 270, 370), and thereby it can be a two-way free-wheel clutch.

9. The Power shif free-wheel clutch (2, 5, 6) according to claim 1 to 8, **characterized in that** the segment ring (130, 430, 530) can be decoupled from the sliding ring (160, 460, 560) only in one direction of rotation, thereby the clutch (2,5,6) is a one-way free-wheel clutch.

10. The Power shif free-wheel clutch (1, 2, 3, 4, 5, 6) according to claim 1 to 8, **characterized in that** the clutch (1, 2, 3, 4, 5, 6) is configurated with clamping bodies, clamping rolls or with clamping balls, with or without cage.

## Revendications

1. L'embrayage à roue libre commandé par la charge (1,2) pour transmettre la force entre deux arbres coaxiaux et l'embrayage comprend:
un arbre (10,110), sur l'arbre se trouvent de manière symétrique, décalés de 120 degrés, trois rainures longitudinales (11,111), dans les rainures longitudinales (11,111) sont montés de manière mobile en direction axiale respectivement un support (20,120) ou une rallonge du pied (23,123) du manchon coulissant (27,127); sur chaque support (20,120) se trouve aussi une cale (35,135) dans la rainure longitudinale;
un anneau à segments (30,130) composé d'au moins trois segments (34,134) et disposé de manière coaxiale par rapport à l'arbre (10,110), une surface extérieure de l'anneau à segments (30,430) prévue avec plusieurs rainures (32,132);
respectivement une cale (35,135) placée entre les segments (34,134) de l'anneau à segments (30,130), qui change le diamètre de l'anneau à segments (30,130); les cales (35,135) sont reliées à l'arbre intérieur (10,110) de manière fixe;
un anneau de glissement (60,160) ayant les caractéristiques suivantes: une fente continue (65,165), une surface de friction extérieure (62,162) qui peut être mise en prise avec la surface de friction intérieure (71,171) du deuxième arbre (70,170) et une surface radiale intérieure prévue avec plusieurs rainures (61,161); une rainure (61,161) de l'anneau de glissement (60,160) située en face et une rainure (32,132) de l'anneau à segments (30,130) forment une poche (40,140); à l'intérieur des poches (40,140) se trouvent des rouleaux cylindriques (50,150);
une tige d'actionneur (66,166) qui est montée à l'arbre intérieur (10,110) mobile en direction radiale; cette tige d'actionneur (66,166) est tendue par un ressort (69,169) dans la direction de l'axe de rotation de l'embrayage; l'anneau de glissement (60,160) et l'anneau à segments (30,130) sont couplés et découplés par la tige d'actionneur (66,166);
une tige à cames (13,113) qui est montée mobile en direction axiale dans une rainure longitudinale (12,112) de l'arbre intérieur (10,110); la tige à cames (13,113) doit faire entrer et faire sortir la tige d'actionneur (66,166) dans la fente (65,165) de l'anneau de glissement (60,160);
un manchon coulissant (27,127) monté de manière mobile en direction axiale par rapport à l'arbre intérieur (10,110); le manchon coulissant (27,127) dispose d'un total de quatre pieds, dont trois sont les pieds (23,123) et dont l'un est le pied (24,124); les trois pieds (23,123) sont disposés les uns aux autres de manière décalée de 120 degrés et ont respectivement un support rallongé (20,120); chaque support (20,120) est installé en dessous d'une cale (35,135) dans la rainure longitudinale (11,111); le quatrième pied (24,124) qui est placé dans la quatrième rainure longitudinale (12,112) a un tenon (25,125); ce tenon doit déplacer en direction axiale la tige à cames (13,113);
deux rondelles de retenue (44,144), à gauche et à droite du rouleau cylindrique (50,150), pour empêcher le mouvement axial du rouleau cylindrique (50,150) et l'agrandissement du diamètre de l'anneau à segments, supérieur à la mesure prédéterminée; chaque rondelle de retenue (44,144) est logée dans une rainure radiale (31,131) de l'anneau à segments (30,130);
respectivement un ressort (48,148) tendu aux deux côtés de l'anneau à segments (30,130) et voulant réduire constamment le diamètre de l'anneau à segments; un deuxième arbre (70,170) ayant une surface de friction intérieure (71,171);
un manchon coulissant (27,127) qui active l'embrayage à roue libre commandé par la charge (1,2) par le découplage de l'anneau de glissement (60,160) et désactive l'embrayage sous charge en modifiant le diamètre de l'anneau à segments;
la force pour désactiver l'embrayage (1,2) sous charge peut être réglée par les dimensions de l'angle (W) se trouvant à la surface latérale (36,136) des cales (35,135).

2. Embrayage à roue libre commandé par la charge (4,5) pour transmettre la force entre deux arbres coaxiaux selon la revendication 1, **caractérisé en ce que** la force pour désactiver l'embrayage (4,5) sous charge peut être réglée par les dimensions de l'angle (W) se trouvant aux surfaces latérales (336,436) des cales (335,435) et par le rapport de longueur entre le bras plus court (321,421) et le bras plus long (322,422) du levier (320,420).

3. Embrayage à roue libre commandé par la charge (3,6) selon la revendication 2, l'embrayage à roue libre (3,6) étant monté sur la surface extérieure de l'arbre (270,570) et la surface intérieure de l'arbre (210,510) pour réaliser la fonction d'un frein commutable.

4. Embrayage commandé par la charge (1,2,4,5) selon la revendication 1, **caractérisé en ce que** l'embrayage (1,2,4,5) est activé par le découplage de l'anneau à segments (30,130,330,430) de l'anneau de glissement (60,160,360,460) en déplaçant en direction axiale le manchon coulissant (27,127,327,427) au moyen de la tige d'actionneur (66,166,366,466), la came de commutation (13,113,313,413), et il est désactivé par la diminution des diamètres de l'anneau à segments (30,130,330,430), en sortant les cales (35,135,335,435) entre les segments (334,434).

5. Embrayage commandé par la charge (3,6) selon la revendication 3, **caractérisé en ce que** l'embrayage (3,6) est activé par le désaccouplement de l'anneau à segments (230,530) de l'anneau de glissement (260,560) en déplaçant en direction axiale le manchon coulissant (227,527) au moyen de la tige d'actionneur (266,566), la tige de came (213,513) et **en ce qu'**il est désactivé par l'agrandissement du diamètre de l'anneau à segments (230,530) au moyen du levier (220,520) et des ressorts (248,548 ou 229,529).

6. Embrayage commandé par la charge (1,2,4,5) selon la revendication 1 ou 2, **caractérisé en ce que** tous les trois segments (34,134,334,434) et tous les trois cales (35,135,335,435) forment ensemble l'anneau de serrage variable de diamètre (30, 130).

7. Embrayage commandé par la charge selon la revendication 1 à 6, **caractérisé en ce que** l'activation et la désactivation de l'embrayage (1,2,3,4,5,6) a lieu par des manchons coulissants (27,127,227,327,427,527) commandés à l'extérieur de l'embrayage.

8. Embrayage commandé par la charge (1,3,4) selon les revendications 1 à 7, **caractérisé en ce que** l'embrayage, lorsqu'il est activé, découple dans les deux sens de rotation l'anneau à segments (30, 230,330) de l'anneau de glissement (60,260,360) au moyen de la tige d'actionneur (66, 266, 366) pour qu'il puisse transmettre une force entre l'arbre (10,210,310) et l'arbre (70,270,370) dans les deux sens et ainsi il est un embrayage à roue libre bidirectionnel.

9. Embrayage commandé par la charge (2,5,6) selon les revendications 1 à 8, **caractérisé en ce que** l'anneau à segments (130, 430,530) ne peut être découplé de l'anneau de glissement (160, 460, 560) que dans un sens de rotation et ainsi l'embrayage (2,5,6) est un embrayage à roue libre unidirectionnel.

10. Embrayage commandé par la charge (1,2,3,4,5,6) selon la revendication 1 à 9, **caractérisé en ce que** l'embrayage (1,2,3,4,5,6) est équipé d'éléments de serrage, de rouleaux de serrage ou de billes de serrage, avec ou sans cage.
